# FASCICULE DE BREVET EUROPEEN

(11) **EP 1 334 860 B1**
(45) Date de publication et mention de la délivrance du brevet: **10.08.2005**
(21) Numéro de dépôt: 03290073.0
(22) Date de dépôt: 13.01.2003
(51) Int. Cl.: B60K 15/06, F02M 21/02

(54) **Dispositif d'alimentation en gaz de pétrole liquéfié, notamment pour des chariots élévateurs**
Vorrichtung zur Zufuhr von Flüssiggas von zum Beispiel Gabelstaplern
System for feeding LPG for example to fork-lift trucks

(30) Priorité: 07.02.2002 FR 0201511
(43) Date de publication de la demande: 13.08.2003
(73) Titulaire: Compagnie des Gaz de Pétrole Primagaz, Société Anonyme, 75017 Paris (FR)
(72) Inventeur: Bouvier, Daniel, 75011 Paris (FR)
(74) Mandataire: Eidelsberg, Albert

(56) Documents cités:
- US-A- 3 710 809
- US-A- 3 916 938
- US-A- 5 975 574
- US-A- 6 102 065

## Description

La présente invention se rapporte aux dispositifs d'alimentation en gaz de pétrole liquéfié qui trouvent une utilité particulière dans les chariots élévateurs.

Les chariots élévateurs sont alimentés soit par des bouteilles de gaz de pétrole liquéfié, soit par un réservoir rempli à une station de gaz de pétrole liquéfié intégrée à l'établissement où circule le chariot.

Si certains réservoirs peuvent être pourvus d'une jauge indiquant la quantité de gaz de pétrole liquéfié présent, il n'en est pas de même des bouteilles et il y a un risque important pour le chariot de tomber en panne, ce qui oblige à amener la bouteille de remplacement là où est immobilisé le chariot, ce qui peut être fort gênant et de toute manière interrompt le travail du cariste.

Pour y remédier, on a prévu au document US-A 5 975 574 un dispositif d'alimentation en gaz de pétrole liquéfié suivant le préambule de la revendication 1. Ce dispositif ayant deux entrées de carburant et une sortie commune est plus avantageux qu'un dispositif ayant une source de gaz de pétrole liquéfié et un réservoir monté en série qui nécessite un indicateur de niveau et dans lequel le cariste n'est averti de l'imminence d'une interruption de l'alimentation que par le moyen d'un indicateur de niveau éventuellement relié à une alerte. Si le dispositif d'alerte tombe en panne ou si le cariste ne le voit pas, le chariot élévateur tombe ultérieurement en panne. Ce n'est pas le cas pour le dispositif décrit au document US-A 5 975 574 où le chariot tombe en panne dès que la source est épuisée et où le cariste doit tourner une vanne pour mettre en action le réservoir. Le cariste est ainsi averti par la nécessité, sous peine d'être en panne, d'effectuer une opération d'un danger immédiat de défaut de carburant. Mais le dispositif décrit au document US-A 5 975 574 a d'autres défauts. Si le remplissage du réservoir s'est effectué à l'ombre et si le chariot fonctionne au soleil il peut se produire une rupture. Si le cariste après avoir rempli le réservoir oublie de fermer la vanne qui y conduit et, en réalité, il ne sait jamais à quel moment le réservoir est rempli et qu'il faut alors effectuer cette opération, le chariot utilise sans que le cariste en soit averti entre les deux, successivement le carburant contenu dans la source et celui contenu dans le réservoir.

L'invention pallie ces inconvénients par les dispositions mentionnées à la revendication principale. D'autres perfectionnements sont mentionnés dans les revendications dépendantes.

Il y a maintenant deux sorties en parallèle, dont l'une ou l'autre fonctionne pour alimenter le moteur. Lorsque la source de gaz de pétrole liquéfié est tarie, le chariot élévateur s'arrête et le cariste doit manoeuvrer les deux vannes en fermant la vanne principale qui était ouverte et en ouvrant la vanne auxiliaire qui était fermée, en sorte qu'il est nécessairement averti de l'imminence du danger de manquer de carburant. En outre, grâce au dispositif de limitation automatique de remplissage, le réservoir ne peut plus être rempli à ras-bord et peut satisfaire aux exigences de sécurité qui font que, même si la température ambiante dans laquelle il se trouve se modifie, il ne se produit pas de rupture du réservoir.

La source de gaz de pétrole liquéfié, qui peut être notamment une bouteille de gaz de pétrole liquéfié, alimente, par exemple le moteur d'un chariot élévateur, et, dans le même temps, remplit le réservoir, qui peut être lui aussi une bouteille normalement de plus petite capacité que celle qui constitue la source, jusqu'au niveau maximum déterminé par le dispositif de limitation automatique de remplissage qui met fin au remplissage lorsqu'un certain niveau du gaz de pétrole liquéfié est atteint dans le réservoir. Le réservoir ne se vide pas, car la vanne auxiliaire est fermée. Lorsqu'il n'y a plus de gaz en phase liquide dans la source, le moteur s'arrête. Le conducteur agit alors sur un moyen qui ouvre la vanne auxiliaire et qui ferme la vanne principale. Le moteur est alimenté par le réservoir. Mais le liquide du réservoir ne peut pas retourner à la source de gaz de pétrole liquéfié en raison de la fermeture de la vanne principale.

Le dispositif de limitation automatique de remplissage peut comporter, de la manière la plus simple, un flotteur monté dans le réservoir et agissant à partir d'un certain niveau de remplissage du réservoir sur un obturateur qui obture le conduit de dérivation. Mais le dispositif de limitation automatique de remplissage peut être aussi un dispositif du type optique qui joue par exemple sur la différence de traitement d'un faisceau optique qui, réfléchi dans le gaz, provoque la fermeture d'une vanne, tandis que dans le liquide il est dispersé.

Il est prévu, de préférence, un dispositif d'alerte qui est déclenché par l'ouverture de la vanne auxiliaire ou par la fermeture de la vanne principale ou par le moyen, tel qu'un interrupteur actionné manuellement, qui ferme la vanne auxiliaire, si la vanne principale est ouverte et ouvre la vanne auxiliaire, si la vanne principale est fermée. Ce dispositif d'alerte peut être un dispositif optique, tel qu'un clignotant ou un dispositif émettant un son ou autres.

De préférence, la vanne principale est une électrovanne normalement ouverte et la vanne auxiliaire est une électrovanne normalement fermée et ledit moyen est un circuit électrique à interrupteur fermé manuellement.

Au dessin annexé, donné uniquement à titre d'exemple :

la figure 1 est un schéma illustrant le dispositif d'alimentation suivant l'invention en fonctionnement normal,

la figure 2 est un schéma semblable à celui de la figure 1 illustrant le dispositif fonctionnant alors qu'il n'y a plus de gaz de pétrole liquéfié dans la source, et

la figure 3 est une vue d'un détail du réservoir représentant le dispositif de limitation automatique de remplissage.

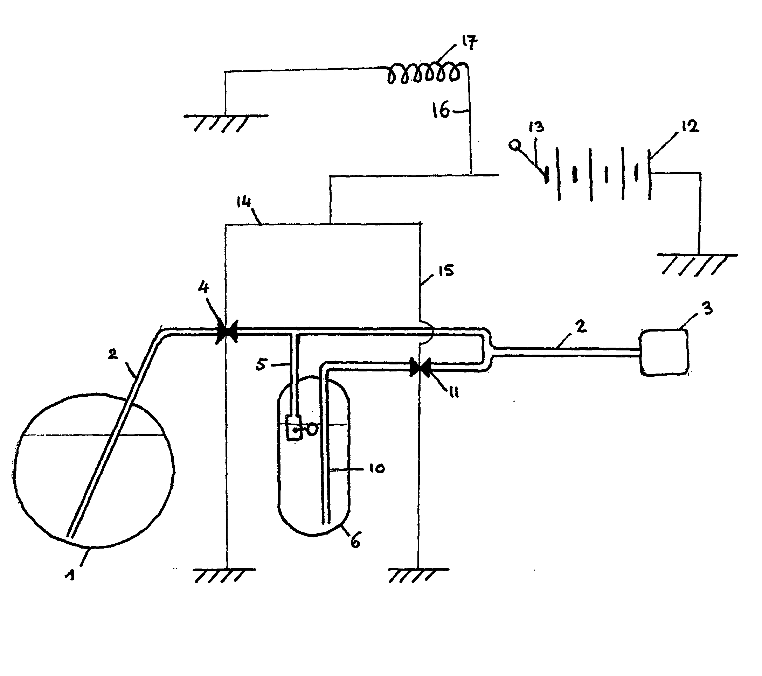

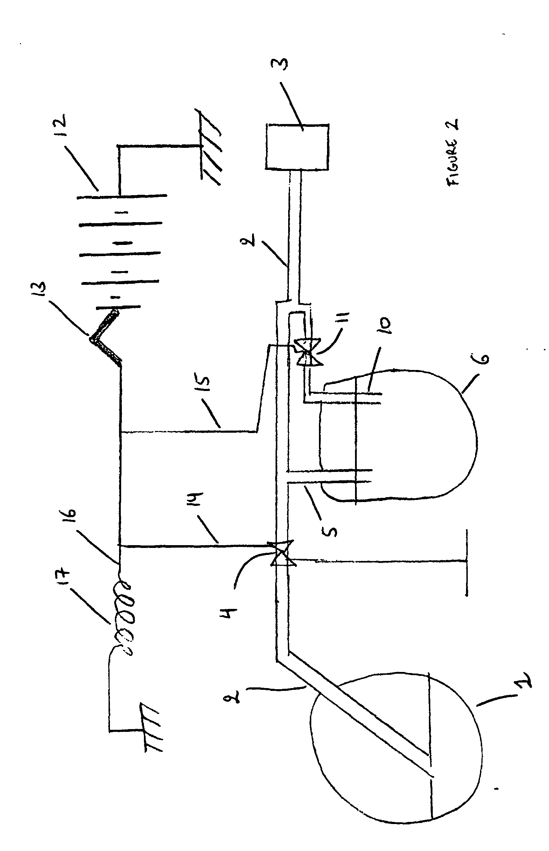

Le dispositif représenté aux figures 1 et 2 comprend une bouteille 1 de gaz de pétrole liquéfié servant de source de gaz de pétrole liquéfié. Du bas de la bouteille 1 part un conduit 2 d'alimentation qui mène à un moteur 3 d'un chariot élévateur. Sur le conduit 2 est montée une électrovanne 4 normalement ouverte. En aval de la vanne 4, dans le sens allant de la bouteille 1 au moteur 3, part du conduit 2 en dérivation un conduit 5 de dérivation qui débouche, par l'intermédiaire d'un dispositif de limitation automatique de remplissage, dans un réservoir 6.

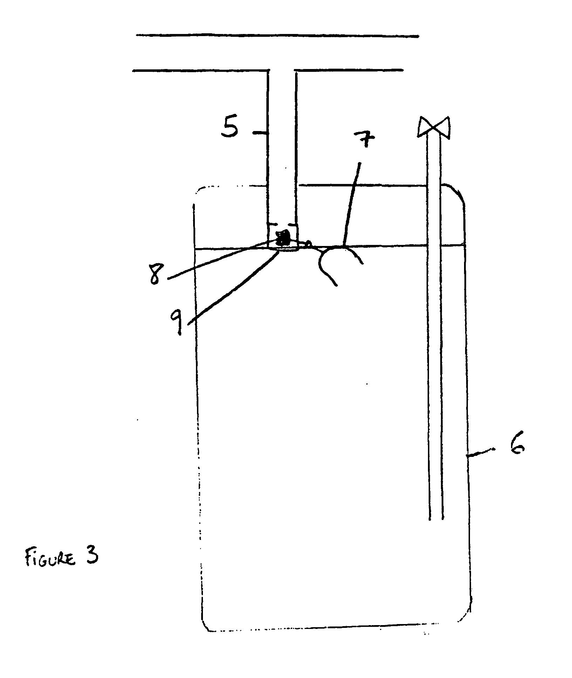

Le dispositif de limitation automatique de remplissage est représenté d'une manière plus précise à la figure 3. Il comporte essentiellement un flotteur 7 monté dans le réservoir 6 et actionnant un obturateur 8 pour l'amener sur un siège 9 lorsque le niveau du liquide dans le réservoir 6 atteint une valeur donnée. Tant que cette valeur n'est pas atteinte, l'obturateur 8 est à distance du siège 9 et du liquide pénètre du conduit 5 dans le réservoir 6.

Du bas du réservoir 6, un conduit 10 de retour débouche dans le conduit 2, par l'intermédiaire d'une électrovanne 11 normalement fermée, en aval de l'électrovanne 4 principale.

Un circuit électrique comporte un générateur 12 et un interrupteur 13 et excite les électrovannes 4 et 11 par des branches 14 et 15 respectives de circuit. Le circuit comporte en outre une branche 16 dans laquelle est monté un clignotant 17.

Lorsqu'il n'y a plus assez de liquide dans la bouteille 1, l'opérateur ferme l'interrupteur 13. L'électrovanne 4 se ferme, tandis que l'électrovanne 11 s'ouvre. Le moteur 3 est maintenant alimenté à partir du réservoir 6, tandis que le clignotant 17 clignote et prévient l'opérateur qu'il faut remplacer la bouteille 1.

## Revendications

1. Dispositif d'alimentation en gaz de pétrole liquéfié, comprenant une source (1) de gaz de pétrole liquéfié ayant un conduit (2) d'alimentation, duquel part en dérivation, en aval d'une vanne principale (4), un conduit de dérivation (5) débouchant dans un réservoir (6), ledit réservoir (6) communicant, avec interposition d'une vanne auxiliaire (11), avec le conduit (2) d'alimentation en aval de la vanne principale (4),
**caractérisé en ce que** le conduit de dérivation (5) débouche dans le réservoir (6) par l'intermédiaire d'un dispositif de limitation automatique de remplissage (7-9), **en ce que** la vanne auxiliaire (11) est montée dans un conduit de retour (10) distinct du conduit de dérivation (5) et **en ce qu'**il est prévu un moyen (12 à 15) qui ferme la vanne auxiliaire (11) si la vanne principale (4) est ouverte et qui ouvre la vanne auxiliaire (11) si la vanne principale (4) est fermée.

2. Dispositif suivant la revendication 1, **caractérisé par** un dispositif d'alerte (16,17) qui est déclenché à l'ouverture de la vanne auxiliaire (11).

3. Dispositif suivant la revendication 1 ou 2, **caractérisé en ce que** la vanne principale (4) est une électrovanne normalement ouverte, la vanne auxiliaire (11) est une électrovanne normalement fermée et le moyen est un circuit électrique à interrupteur (13) fermé manuellement.

4. Dispositif suivant la revendication 3 quant celle-ci est baseé sur la revendication 2, **caractérisé en ce que** l'alerte est déclenchée par la fermeture de l'interrupteur (13).

5. L'utilisation d'un dispositif suivant l'une des revendications précédentes pour alimenter un chariot élévateur.

## Patentansprüche

1. Flüssiggasversorgungseinrichtung, umfassend eine Flüssiggasquelle (1) sowie eine Versorgungsleitung (2), von der eine, einem Hauptelektroventil (4) nachgeschaltete Zweigleitung (5) abgeht, die in einem Behälter (6) endet, wobei der genannte Behälter (5) über ein Hilfsventil (11) mit der dem Hauptventil (4) nachgeschalteten Versorgungsleitung (2) in Verbindung steht,
**dadurch gekennzeichnet, dass** die Zweigleitung (5) in einem Behälter (6) über eine automatische Füllbegrenzungsvorrichtung (3-9) endet und dass das Hilfsventil (11) in einer Rücklaufleitung (10) eingebaut ist, die sich von der Zweigleitung (5) unterscheidet und dass ein Mittel (12 bis 15) vorgesehen ist, welches das Hilfsventil (11) schließt, wenn das Hauptventil (4) geöffnet ist und das Hilfsventil (14) öffnet, wenn das Hauptventil (14) geschlossen ist.

2. Vorrichtung gemäß Anspruch 1, **gekennzeichnet durch** eine Wamvorrichtung (14,16), die beim Öffnen des Hilfsventils (11) ausgelöst wird.

3. Vorrichtung gemäß Anspruch 1 oder 2, **dadurch gekennzeichnet, dass** das Hauptventil (4) ein normalerweise geöffnetes Elektroventil ist, dass das Hilfsventil (11) ein normalerweise geschlossenes Elektroventil ist und dass das Mittel ein elektrischer Kreis mit einem von Hand schließbaren Schalter (13) ist.

4. Vorrichtung gemäß Anspruch 3, wobei dieser auf dem Anspruch 2 beruht,
**dadurch gekennzeichnet, dass** die Alarmvorrichtung durch das Schließen des Schalters (13) ausgelöst wird.

5. Die Verwendung einer Vorrichtung gemäß einem der vorstehenden Ansprüche, um einen Gabelstapler zu versorgen.

## Claims

1. Device for delivering liquefied petroleum gas, comprising a source (1) of liquefied petroleum gas having a supply pipe (2) from which there branches off, downstream of a main valve (4), a branch pipe (5) leading into a tank (6), the said tank (6) communicating, with interposition of an auxiliary valve (11), with the supply pipe (2) downstream of the main valve (4),
**characterized in that** the branch pipe (5) leads into the tank (6) by means of a device for automatic limitation of filling (7-9), **in that** the auxiliary valve (11) is mounted in a return pipe (10) distinct from the branch pipe (5) and **in that** a means (12 to 15) is provided which closes the auxiliary valve (11) if the main valve (4) is opened and which opens the auxiliary valve (11) if tne main valve (4) is closed.

2. Device according to Claim 1, **characterized by** an alert device (16, 17) which is triggered when the auxiliary valve (11) is opened.

3. Device according to Claim 1 or 2, **characterized in that** the main valve (4) is a normally open electrovalve, the auxiliary valve (11) is a normally closed electrovalve and the means is a manually closed electric circuit with switch (13).

4. Device according to Claim 3 when the latter is based on Claim 2, **characterized in that** the alert is triggered by the closure of the switch (13).

5. The use of a device according to one of the preceding claims to power a forklift truck.
